# EUROPEAN PATENT APPLICATION

(11) **EP 4 644 648 A1**
(43) Date of publication of application: **05.11.2025**
(21) Application number: 25173795.3
(22) Date of filing: 30.04.2025
(51) Int. Cl.: E05D 15/06

(54) **ROLLER ASSEMBLY FOR A SLIDABLE PANEL**

(30) Priority: 02.05.2024 GB 202406189
(71) Applicant: Ciilock Engineering Pty Ltd, Melbourne, VIC 3803 (AU)
(72) Inventor: Jaber, Hani, Hallam, 3803 (AU); Jaber, Simon, Hallam, 3803 (AU); Overton, Luke, Hallam, 3803 (AU); Wang, Li, Hallam, 3803 (AU); LI, Weidong, Hallam, 3803 (AU)
(74) Representative: Harrison IP Limited

(57) **Abstract**

A roller assembly is disclosed for mounting to the underside of a slidable panel. The assembly is formed of a plurality of serially arranged interconnected components that comprise two end support blocks, a plurality of roller carriages disposed between the end blocks, and a respective intermediate support block disposed between each adjacent pair of roller carriages. The roller carriages have inclined sides in engagement with inclined sides of the support blocks, the engagement permitting adjacent components to slide relative to one another while preventing relative movement in a direction transverse to the sliding direction. The inclination of the sides is such as to cause the rollers carriages to be urged away from the underside of the slidable panel when the two end blocks are urged towards one another. **In** the invention, each of the end blocks is formed with a formation to enable the end block to be secured directly to the underside of the slidable panel and at least one of the end blocks is formed in two parts, one part having the formation to enable the part to be secured to the slidable panel and other being in slidable engagement a roller carriage and adjustably connected to the first part.

## Description

### Field

The present invention relates to a roller assembly for a slidable panel.

### Background

The present invention is an improvement over the roller carriage assembly previously proposed by the Applicant in GB 2573876. Such an assembly is shown in Figures 1 to 4 of the accompanying drawings. Figure 1 shows an exploded view of the same assembly and corresponds to Figure 1a of GB 2573876. Figures 2 and 3 are diagrammatic representations of the assembly that demonstrate its operating principle. These figures will be described herein only to the extent necessary to understand the present invention, but the entire teaching of GB 2573876 is incorporated herein by reference to avoid unnecessary repetition.

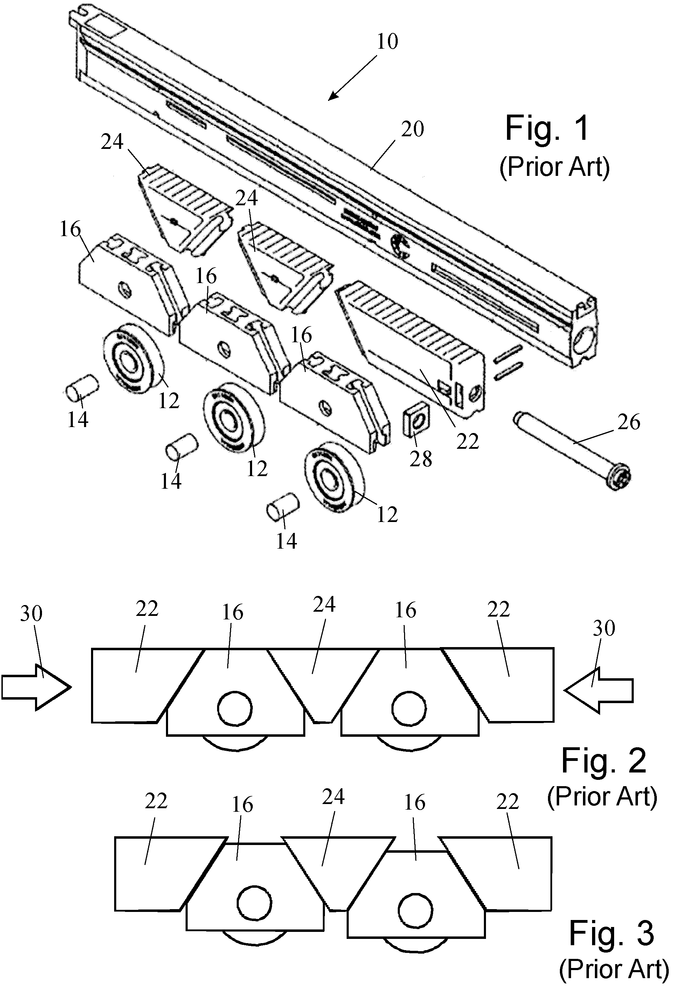

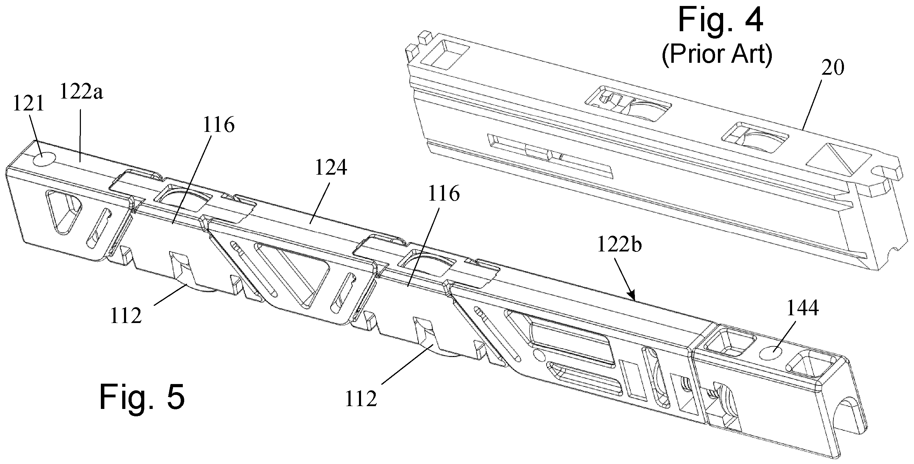

The roller carriage assembly 10 in Figures 1 and 4 comprises rollers 12 mounted by means of axles 14 in roller carriages 16. Each roller carriage is generally shaped as a trapezium with inclined sides tapering towards the top. The assembly comprises a housing 20, more clearly shown in Figure 4, that is to be secured to the underside of the slidable panel, within which housing there are retained two end support blocks 22 (only one is shown in Figure 1) and two intermediate support blocks 24. A bolt 26 and a nut 28 allow the position of one of the end blocks 22 to be adjusted relative to the housing 20, so as to reduce or increase the distance between the two end blocks 22.

The support blocks 22 and 24 all have inclined sides that are in tongue and groove engagement with the inclined sides of the roller carriages 16 so that these components can slide relative to one another. The shape of the tongues and grooves is such that the components cannot be moved relative to one another in any direction perpendicular to the sliding direction.

As will be seen from a comparison of Figures 2 and 3, when a force, represented by the arrows 30, is applied by means of the bolt 26 to push the components towards one another, the roller carriages 16 are pushed downwards to allow the height of the slidable panel to be adjusted. It will also be seen from Figure 3 that if the reaction forces on the roller carriages are unequal, for example on account of unevenness in the ground, their heights will automatically adjust independently of one another.

A roller carriage assembly generally similar to GB 2573876 is also known from IT201900009900.

### Object

The aim of the present invention is to provide a roller assembly that operates on the same principle as GB 2573876, but that allows manufacturing costs to be reduced by requiring fewer components.

### Summary

This aim is achieved in the present invention by omitting the housing and designing the wheel carriages and the support blocks in such a manner as to obviate the need for a housing.

In accordance with the present invention, there is provided a roller assembly as hereinafter set forth in Claim 1 of the appended claims.

In some embodiments, the inclined sides of the support blocks and the roller carriages are in tongue and groove engagement with one another, to prevent relative movement in a direction within the sliding plane transverse to the sliding direction.

In order to prevent separation of adjacent components in a direction normal to the sliding plane while permitting along the sliding direction, one of the components may be provided with a pin captively received within a slot in the other.

Catches may be provided between the roller carriages and the support blocks to retain all the components in a predetermined relative alignment, in order to assist installation of the assembly on a slidable panel.

As a further possibility a rod-like element may be slidably connected to the end support blocks, and optionally to the intermediate support blocks, the connection being, for example, a friction fit, sufficient to hold the roller assembly temporarily in a desired position during installation but not able to withstand the load of the slidable panel during use of the roller assembly.

Because the components are prevented from separating from one another, the need for a housing is avoided. During assembly, it is possible, instead, to place the assembly of components against the underside of the slidable panel and to secure the end blocks directly to the panel by means of suitable fixings.

According to a second aspect of the invention, there is provided a roller assembly for mounting to the underside of a slidable panel, as hereinafter set forth in Claim 9 of the appended claims.

As with the first aspect of the invention, the components of the roller assembly are secured in relation to one another and the sliding panel without the need for a housing. The range of movement of the roller carriages in a direction away from the sliding panel is restricted in this case by directly limiting the extent to which the roller carriages can slide relative to the support blocks, rather than by the range of adjustment afforded by the end blocks.

### Brief description of the drawings

The invention will now be described further, by way of example, with reference to the accompanying drawings, in which:
Figure 1 is an exploded view of a roller assembly that is known from GB 2573876,
Figures 2 and 3 are diagrammatic representation of components of the roller assembly of Figure 1 that illustrate the principle of operation of the assembly.
Figure 4 shows a perspective view of the roller assembly of Figure 1,
Figure 5 is a perspective view of a roller assembly of the invention,

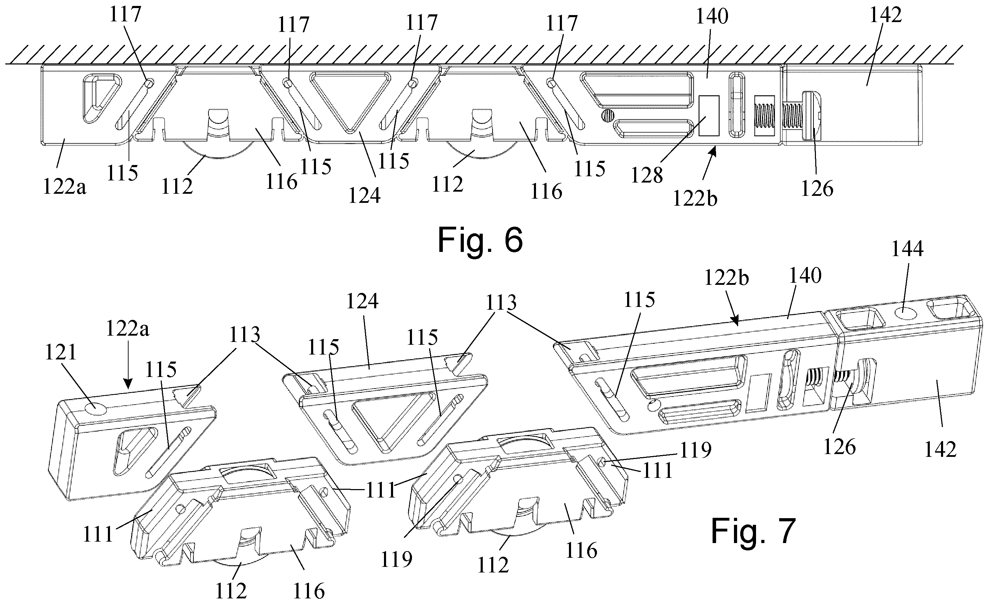

Figure 6 is a front view of the assembly of Figure 5 when secured to the underside of a slibable panel,
Figure 7 is an exploded perspective view of the roller assembly of Figures 5 and 6,

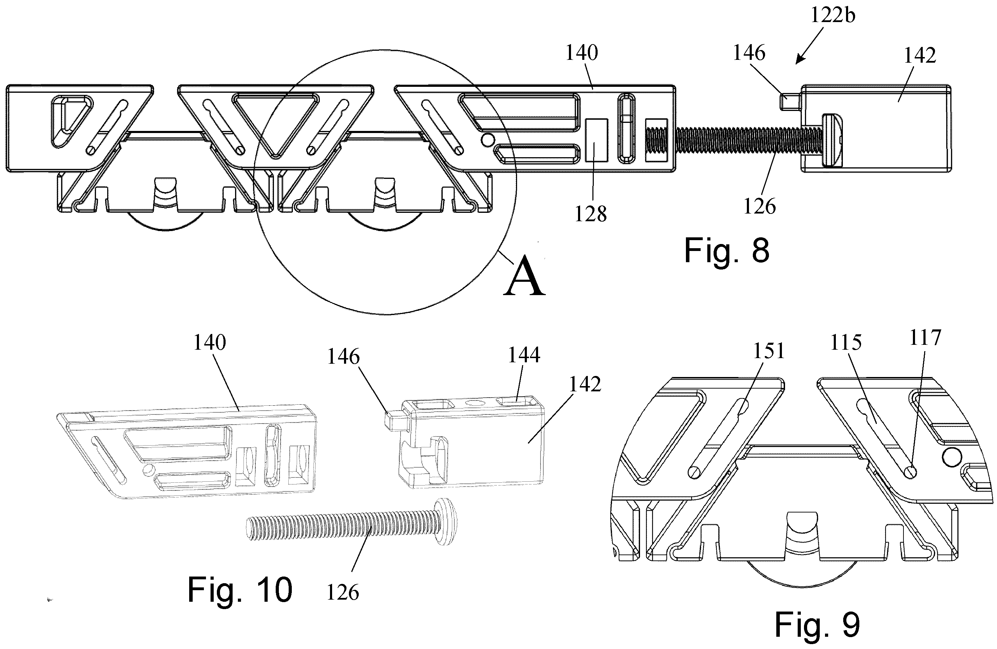

Figure 8 a front view of the roller assembly of Figure 6 when adjusted to raise the height of the slidable panel,
Figure 9 is a detail of Figure 8 within a circle A, drawn to an enlarged scale,
Figure 10 is an exploded perspective view of an adjustable end block,

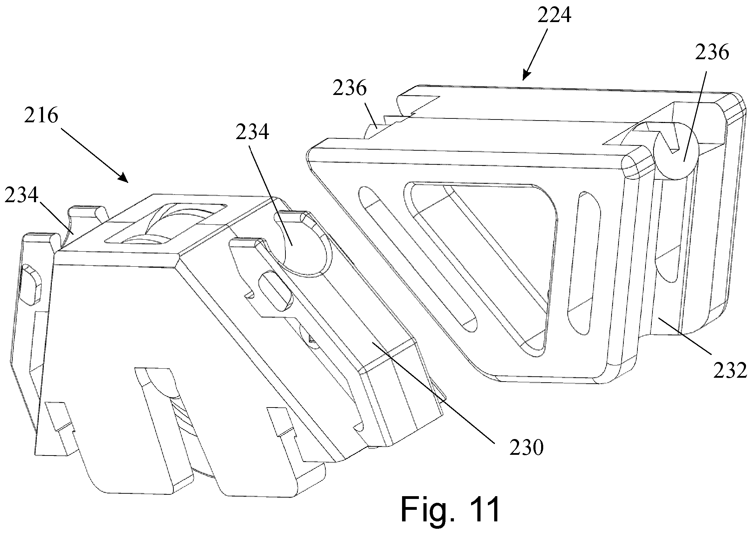

Figure 11 is a detail of an exploded view of an alternative embodiment of the invention.

### Detailed description of the drawings

To avoid unnecessary repetition, components of Figures 5 to 11 that correspond to components of the prior art roller assembly of Figures 1 and 4 have been given reference numerals with the same two least significant digits and will not be described again.

Terms such as "top", "bottom" and "underside", as used herein, are to be understood as relating to the orientation adopted when the slidable panel is in use, i.e. when the panel is vertical, and its weight is supported on the rollers of the assembly.

From a brief comparison of Figures 4 and 5, it will be seen that the assembly of the invention differs from the prior art assembly of Figure 4 in that it has no outer housing 20 for securing it to the underside of a slidable panel. Instead, in the assembled state shown in Figure 5, the roller carriages 116, the intermediate support block 124 and the end support blocks 122a and 122b are all clearly visible. Differences in the construction of these components of the roller assembly will now be described, to explain how it has been made possible to omit the housing 20.

As best shown in Figures 6 and 7, the sliding engagement between the roller carriages 116 and the support blocks 122a, 122b and 124 has been modified from that shown in Figure 1. The roller carriages 116 have tongues 111 that are slidably received in grooves 113 in the blocks 122a, 122b and 124. This tongue and groove engagement ensures that the components remain coplanar, i.e. they are prevented from moving relative to one another in direction normal to the plane of the slidable panel.

The tongue and groove engagement also allows the components to slide relative to one another, but it does not comprise any form of undercut, as is present in the assembly of Figure 1, to prevent each roller carriage 116 from being pulled apart from the adjacent support block 122a, 122b or 124. Thus, the tongues 111 do not have a T-shaped cross section and the grooves 113 do not need to be machined to be wider at the base than at the mouth. The fact that the grooves 113 do not need to be machined with an undercut considerably simplifies their manufacture.

It is nevertheless necessary to ensure that the roller carriages 116 should not be separable from the adjacent support blocks 122a, 122b or 124 and this is achieved in the illustrated embodiments by slots 115 formed in the sides of the support blocks 122a, 122b and 124 that receive pins 117 driven into transverse holes 119 in the tongues 111 after the tongues 111 have been engaged in the grooves 113. Once the pins 117 have been inserted into the tongues 111, the roller carriages can no longer move in a direction perpendicular to the sliding direction. Furthermore, the length of the slots 115 limits the extent to which the components can slide relative to one another and thereby prevents the separation of all the components from one another.

Aside from the shape of the groove 113 and the provision of a slot 115 in the intermediate block 124, it does not differ materially from the intermediate blocks 24 described in GB 2573876. In the absence of a housing, the upper face of the or each intermediate block 204 rests directly against the underside of the slidable panel. The intermediate block is not however secured to the slidable panel, as they it needs to be able to move from side to side. This will be evident from a comparison of the position of the intermediate block 24 in Figures 2 and 3.

In the illustrated embodiment, one of the end blocks 122a is not adjustable and only the other end block 122b is adjustable. This need not, however, be the case, and it would be possible for both end blocks to be adjustable.

The non-adjustable end block 122a is essentially one half of an intermediate block 24 but it is additionally provided with a fixing hole 121 to allow it to be secured by a screw to the underside of the slidable panel.

The adjustable end block 122b, as best shown in Figures 8 and 10, is formed of two separate parts 140 and 142 connected to one another by a nut 128 and a bolt 126. The nut 128 is held captive in a pocket of the part 140, into which it can be slid from a side, while the head of the bolt 126 is captive in a pocket in the part 142 into which it can be slid in a similar manner. After insertion of the nut 128 and bolt 126 into their respective parts 140, 142, they can be threadedly engaged with one another to secure the two parts 140 and 142 to one another. The part 142 is formed with a hole 144 for receiving a fixing screw by means of which it can be securely attached to the underside of the slidable panel while the part 140 is movable relative to the slidable panel by rotating the bolt 126.

Once the bolt 126 is threaded into the nut, the latter can no longer separate from the part 140. The head of the bolt 126 can, however, slip out of the pocket in the part 142. To maintain all the components together and aligned during installation, interlocking formations are formed on the mating faces of the parts 140 and 142. In the illustrated embodiment, a projecting nose 146 on the part 142 is received within a recessed pocket in the part 140. Because of the interlocking of the parts 140 and 142 in their position shown in Figure 6, the bolt 126 cannot separate from the part 142.

It will also be seen from the detail shown in Figure 9 that each slot 115 is formed near its top end with a notch or constriction 151 so that the pin 117 will encounter some resistance when passing through the constriction. These constrictions 151 function as catches to ensure that the components tend to remain in the relative positions shown in Figures 5 and 6 without any tendency to slide relative to one another. This enables the entire correctly aligned roller assembly to be secured to the underside of the slidable panel by two fixing screws inserted into the holes 121 and 144 in the end blocks 122a and 122b.

Figure 11 shows an alternative embodiment with differently constructed catches between the roller carriages 216 and the support blocks 224. In this embodiment, a recess 234 is formed at the top of each tongue 230 to receive a cylindrical projection 236 protruding from the support block at the top of the groove 232 that receives the tongue 230. The projection 236 is a push fit in the recess so that resistance is encountered when the roller carriage 224 is raised to this highest relative position and tends to stay in that position during installation.

Once secured to the slidable panel, the distance between the part 140 and the end block 122a can be adjusted by rotating the bolt 126, thereby adjusting the height of the slidable panel. This can be seen by comparing Figure 6 and 8, Figure 6 showing the roller carriages 116 in their highest position in contact with the underside of the slidable panel and Figure 8 showing the roller carriages at their greatest distance from the underside of the slidable panel.

The roller assembly prior to installation adopts the configuration shown in Figures 5 and 6. The two parts 140 and 142 are assembled to one another using the bolt 126 and the nut 128 and brought as close to one another as possible. After the tongues 111 of the roller carriages have been engaged in the grooves 113 of the end and intermediate support blocks 122, 124, the pins 117 are driven into the holes 119 in the tongues 111 to prevent separation of all the components. The carriages 116 are then raised to their highest position in which the pins 117 pass through the constrictions 151 (or the cylinders 236 are received in the recesses 234 in the case of the embodiment of Figure 11) and maintain the components aligned.

The roller assembly is offered in this configuration to the underside of the slidable panel and fixing screws are inserted through the holes 121 and 144 to secure to the roller assembly to the slidable panel. The panel may now be positioned in a track and its height adjusted by rotating the bolt 126. Provided that the fixings of the end support blocks are sufficiently strong to withstand the load placed on them by the weight of the slidable panel, at a time when the roller carriages are not all in direct contact with the underside of the slidable panel, the need for the housing present the prior art assembly of GB 2573876 is obviated, as its primary function was to prevent the end support blocks from moving apart.

The principle of operation of the described roller assembly of the invention is the same as described in GB 2573876. For this reason, the description above has concentrated only on the modifications made to enable the assembly to dispense with a housing. To avoid detailed unnecessary repetition, the interested reader is referred to GB 2573876 which is herein imported by reference, for details of construction not described above.

In prior art roller assemblies having an outer housing, the latter needed to be dimensioned to suit the number of roller carriages. A heavier panel, requiring a greater number of rollers required a larger housing. An important advantage of the invention is that the roller assembly is essentially modular, and the same set of roller carriages and intermediate support blocks can be combined in any number to suit the load.

Some known roller assemblies allow rollers to move independently by mounting pairs of rollers on opposite ends of a rocker, each rocker acting in a manner similar to the bogey of a train carriage. A disadvantage of relying on basculation is that, to accommodate increased loads, rollers can only be added in pairs, whereas as in the present invention, the number of rollers can be odd as well as even.

It will be clear to persons skilled in the art that various modifications can be made the embodiments described above without departing from the scope of the invention as set out in the appended claims. For example, instead of pins in slots, roller carriages can be prevented from separating from the support blocks by interlocking formations having an undercut, as taught by GB 2573876. Furthermore, alternative ways may be used to limit the extent of sliding movement, such as a projection on the side face of the roller carriage encountering an obstacle on the side face of the support block.

## Claims

1. A roller assembly for securing to an underside of a slidable panel formed of a plurality of serially arranged interconnected components that comprise two end support blocks (122a, 122b), a plurality of roller carriages (116) disposed between the end support blocks (122, 122), and a respective intermediate support block (124) disposed between each adjacent pair of roller carriages (116), wherein the roller carriages (116) have inclined sides engaging inclined sides of the support blocks (122,124) along sliding planes, the engagement permitting adjacent components to slide relative to one another in one direction within the sliding plane, while preventing relative movement within the sliding plane is a direction transverse to the sliding direction and preventing relative movement in a direction normal to the sliding plane and the inclination of the sliding planes being such as to cause the rollers carriages (116) to be urged away from the underside of the slidable panel when the two end blocks are urged towards one another, **characterised in that** each of the end support blocks (122a, 122b) is formed with a formation(121, 144) to enable the end block (122a, 122b) to receive a fixing to secure the respective end block directly to the underside of the slidable panel, the fixings alone sufficing to maintain a fixed distance between the end support blocks (122a, 122b) when the weight of the slidable panel is supported by the roller carriages, and at least one of the end support blocks (122b) is formed in two parts (140,142), one part (142) having the formation to enable the part to be secured to the slidable panel and other (144) being in slidable engagement with a roller carriage (116) and adjustably connected to the first part (142).

2. A roller assembly as claimed in claim 1, wherein the inclined sides of the support blocks (122, 124) and the roller carriages (116) are in tongue (230) and groove (232) engagement with one another, to prevent relative movement in a direction within the sliding plane transverse to the sliding direction.

3. A roller assembly as claimed in claim 1 or 2, wherein, in order to prevent separation of adjacent components in a direction normal to the sliding plane while permitting along the sliding direction, one of the components is provided with a pin (119) captively received within a slot (115) in the other.

4. A roller assembly as claimed in any one of claims 1 to 3, wherein catches (117) are provided between the roller carriages (116) and the support blocks (122,124) to retain all the components in a predetermined relative alignment, order to assist installation of the assembly on a slidable panel.

5. A roller assembly as claimed in claim 4 when appended to claim 3, wherein the catches are formed by constrictions (117) in the slots (115) receiving the pins (119).

6. A roller assembly as claimed in claim 4 when appended to claim 2, wherein the catches are formed by recesses (234) at the end of the tongues (230) receiving, with a push fit, projections (236) formed in the mating grooves (232).

7. A roller assembly as claimed in claim 1, wherein, in order to prevent separation of adjacent components while permitting them to slide relative to one another, a rod-like element is slidably connected to the end support blocks, the connection between the rod-like element being sufficient to hold the roller assembly temporarily in a desired position during installation, but not able to withstand the load of the slidable panel during use of the roller assembly.

8. A roller assembly as claimed in any preceding claim secured to the underside of a slidable panel by means of fixings engaged in the formations of the end support blocks.

9. A roller assembly for securing to an underside of a slidable panel formed of a plurality of serially arranged interconnected components that comprise two end support blocks (122a, 122b), a plurality of roller carriages (116) disposed between the end support blocks (122, 122), and a respective intermediate support block (124) disposed between each adjacent pair of roller carriages (116), wherein the roller carriages (116) have inclines sides engaging inclined sides of the support blocks (122,124) along sliding planes, the engagement permitting adjacent components to slide relative to one another in one direction within the sliding plane, while preventing relative movement within the sliding plane is a direction transverse to the sliding direction and preventing relative movement in a direction normal to the sliding plane, and the inclination of the sliding planes being such as to cause the rollers carriages (116) to be urged away from the underside of the slidable panel when the two end blocks are urged towards one another, **characterised in that** each of the end support blocks (122a, 122b) is formed with a formation (121, 144) to enable the end block to receive a fixing to secure the respective end block directly to the underside of the slidable panel, the fixings alone serving to maintain a fixed distance between the end support blocks when the weight of the slidable panel is supported by the roller carriages, and the engagement between adjacent components limits the range over which the components can slide relative to one another, so as to prevent the components from separating from one another.

10. A roller assembly as claimed in claim 9, wherein the inclined sides of the support blocks (122, 124) and the roller carriages (116) are in tongue (230) and groove (232) engagement with one another, to prevent relative movement in a direction within the sliding plane transverse to the sliding direction.

11. A roller assembly as claimed in claim 9 or 10, wherein, in order to prevent separation of adjacent components in a direction normal to the sliding plane while permitting along the sliding direction, one of the components is provided with a pin (119) captively received within a slot (115) in the other.

12. A roller assembly as claimed in any one of claims 9 to 11, wherein catches (117) are provided between the roller carriages (116) and the support blocks (122,124) to retain all the components in a predetermined relative alignment, order to assist installation of the assembly on a slidable panel.

13. A roller assembly as claimed in claim 12 when appended to claim 11, wherein the catches are formed by constrictions (117) in the slots (115) receiving the pins (119).

14. A roller assembly as claimed in claim 12 when appended to claim 10, wherein the catches are formed by recesses (234) at the end of the tongues (230) receiving, with a push fit, projections (236) formed in the mating grooves (232).
